# EUROPÄISCHE PATENTSCHRIFT

(11) **EP 2 274 094 B1**
(45) Veröffentlichungstag und Bekanntmachung des Hinweises auf die Patenterteilung: **03.10.2018**
(21) Anmeldenummer: 09738003.4
(22) Anmeldetag: 15.04.2009
(51) Int. Cl.: B01J 23/63, B01J 23/89, B01J 37/02, C10J 3/84, C10K 1/34

(54) **VERWENDUNG EINES KATALYSATORS AUF EDELMETALLBASIS ZUR VERRINGERUNG DES TEERGEHALTS IN GASEN AUS VERGASUNGSPROZESSEN**
APPLICATION OF A NOBLE METAL BASED CATALYST TO LOWER THE TAR CONTENT OF GASES FROM GASIFIACTION PROCESSES.
APPLICATION D' UN CATALYSEUR BASÉ SUR DES MÉTAUX NOBLES POUR LA DIMINUTION DE LA TENEUR EN GOUDRONS DES GAZ PROVENANT DES PROCÉDÉS DE GAZÉIFICATION.

(30) Priorität: 28.04.2008 DE 102008021084
(43) Veröffentlichungstag der Anmeldung: 19.01.2011
(73) Patentinhaber: Clariant Produkte (Deutschland) GmbH, 65929 Frankfurt am Main (DE)
(72) Erfinder: ANFANG, Georg, 83620 Vagen (DE); MODL, Norbert, 83043 Bad Aibling (DE)
(74) Vertreter: Clariant Produkte (Deutschland) GmbH
(86) Internationale Anmeldenummer: PCT/EP2009/054429
(87) Internationale Veröffentlichungsnummer: WO 2009/132959

(56) Entgegenhaltungen:
- WO-A1-2007/116121
- WO-A2-2009/132960
- US-A1- 2005 255 995
- US-A1- 2006 182 679
- M.A. Gerber: "Review of Novel Catalysts for Biomass Tarr Cracking and Methane Reforming" Pacific Northwest National Laboratory Oktober 2007 (2007-10), XP002584397 Gefunden im Internet: URL:http://www.pnl.gov/main/publications/e xternal/technical_reports/PNNL-16950.pdf> [gefunden am 2010-05-27]

## Beschreibung

Die Erfindung betrifft ein Verfahren zur katalytischen Verringerung des Teergehalts in Gasen aus Vergasungsprozessen.

Die Erfindung betrifft ferner die Verwendung eines Katalysators auf Edelmetallbasis zur Verringerung des Teergehalts in Gasen aus Vergasungsprozessen.

Unter einem Vergasungsprozess ist im Rahmen der vorliegenden Erfindung insbesondere die thermo-chemische Vergasung von kohlenstoffhaltigen Ausgangsmaterialien zu verstehen. Bevorzugt sind darunter Biomasse-Vergasungsprozesse zu verstehen. Die im Vergaser erzeugten Brenngase können zur Stromerzeugung mittels Verbrennungskraftmaschinen (z. B. Gasmotor) oder in Brennstoffzellen genutzt werden. Außerdem besteht die Möglichkeit, die erzeugten Brenngase als Synthesegas für die Synthese von flüssigen Kraftstoffen wie z. B. Methanol, Diesel oder Benzin zu verwenden.

Teer wird meistens als unerwünschtes Nebenprodukt in thermochemischen Vergasungsprozessen erzeugt und ist eine komplexe Mischung aus organischen Verbindungen. Im Rahmen der vorliegenden Erfindung werden unter Teer Mischungen zyklischer und polyzyklischer aromatische Kohlenwasserstoffe verstanden. Insbesondere weisen diese Verbindungen ein Molekulargewicht von mehr als etwa 78 g/mol auf (Molekulargewicht von Benzol).

So entstehen beispielsweise bei der Vergasung von Biomasse temperatur- und prozessabhängig unterschiedliche Mengen an Gasen, Teeren und Koks. Die Menge und die genaue Zusammensetzung der Teerverbindungen hängen vorrangig von der verwendeten Biomasse, den Vergasungsbedingungen und dem Vergasertyp ab. Die DE102004024672A1 beschreibt beispielsweise den Zusammenhang bei der Gaserzeugung in Festbettvergasern. Dabei werden zwei Grundprinzipien unterschieden: Die Gegenstromvergasung ist zwar vergleichsweise technisch einfach, produziert jedoch brennbare Nutzgase mit extrem hohen Teergehalten. Bei der technisch anspruchsvolleren Gleichstromvergasung können zwar Nutzgase mit geringerem Teergehalt erzeugt werden, jedoch ist das Upscaling dieser Anlagen entsprechend schwieriger. Auch bei anderen Vergasertypen wie z. B. bei Wirbelschichtvergasern werden Teere erzeugt. Der Teergehalt im Rohgas kann beispielsweise zwischen 1 und 100 g/m³ variieren (Devi L., Nair S.A., Pemen A.J.M. et al., Tar Removal from Biomass Gasification Processes, Biomass and Bioenergy: New Research, 2006, pp. 249-274).

Unterhalb von 300 bis 400°C liegen die meisten Teere in kondensierter oder resublimierter Form vor. Dadurch werden Probleme durch Verkokung und Kondensierung auf den verschiedenen Material- und/oder Katalysatoroberflächen verursacht.

Daher ist es notwendig, den Teergehalt in durch Vergasungsprozesse erhaltenen teerhaltigen Gasen zu verringern. Dadurch kann eine weitere Verwendung der erhaltenen Gase, beispielsweise als Synthesegas oder in Brennstoffzellen, ermöglicht werden.

Die Entfernung von Teer aus durch Vergasungsprozesse erhaltenen Gasen kann grundsätzlich in Primär- und Sekundärmaßnahmen kategorisiert werden: Als Primärmaßnahme bezeichnet man Techniken, die bereits während der Vergasung angewendet werden. Sekundärmaßnahmen sind dem Vergaser nachgeschaltet. Beide Verfahren beruhen auf physikalischen oder chemischen Methoden.

Bei der physikalischen Teerentfernung werden beispielsweise Wäscher oder Keramikfilter angewandt. Diese Methoden sind aber meist energieintensiv und erfordern die Installation von zusätzlichem Equipment.

Unter chemischer Teerentfernung versteht man vorrangig thermisches Cracken oder katalytische Konversion der Teere. Beim thermischen Cracken sind sehr hohe Temperaturen von mindestens 1000°C erforderlich. Jess, A. (1996) beschreibt in "Mechanisms and kinetics of thermal reactions of aromatic hydrocarbons from pyrolysis of solid fuels", Fuel 75, 1441-1448, dass eine vollständige Konversion von Naphthalen ähnlichen Molekülen sogar erst bei Temperaturen von 1400°C geschieht. Neeft, J.P.A., Knowef, H.A.M., Onaji, P. (1999) weisen in "Behaviour of tar in biomass gasification systems. Tar related problems and their solutions." Novem, The Netherlands, Report No. 9919, darauf hin, dass eine Folge der hohen Temperaturen Rußerzeugung sein kann. Das Hauptproblem des thermischen Crackens ist jedoch der erhöhte Energieverbrauch und der damit verbundene Wirkungsgradverlust einer Vergasungsanlage.

Bei der katalytischen Teerentfernung wird der Teer mittels eines Katalysators bei z. B. 800°C bis 900°C umgesetzt und zerstört. Der Katalysator kann direkt im Vergasungsreaktor oder in einem nachgeschalteten externen Reaktor eingesetzt werden. Geeignete Katalysatoren sind beispielsweise nichtmetallische Katalysatoren wie Dolomite, Zeolithe und Kalkspat. Geeignete metallische Katalysatoren basieren auf Ni, Ni/Mo, Ni/Co/Mo, NiO, Pt oder Ru (Corella, Jose, Orio, Alberto and Aznar, Pilar, Biomass Gasification with Air in Fluidized Bed: Reforming of the Gas Composition with Commercial Steam Reforming Catalysts, Ind. Eng. Chem. Res., 1998, 4617-4624; Corella, Jose, Orio, Alberto and Toledo, Jose-Manuel., Biomass Gasification with Air in a Fluidized Bed: Exhaustive Tar Elimination with Commercial Steam Reforming Catalysts, Energy Fuels, 1999, 702-709; Corella, J., Caballero, M. A., Aznar, M. P. and Gil, J., Biomass gasification with air in fluidized bed: hot gas cleanup and upgrading with steam-reforming catalysts of big size, 1999, 933-938; Caballero, Miguel A., Corella, Jose, Aznar, Maria-Pilar and Gil, Javier., Biomass Gasification with Air in Fluidized Bed. Hot Gas Cleanup with Selected Commercial and Full-Size Nickel-Based Catalysts, 2000, 1143-1154; Delgado, Jesus, Aznar, Maria P. and Corella, Jose., Biomass Gasification with Steam in Fluidized Bed: Effectiveness of CaO, MgO, and CaO-MgO for Hot Raw Gas Cleaning, Ind. Eng. Chem. Res., 1997, 1535-1543; Delgado, Jesus, Aznar, Maria P. and Corella, Jose., Calcined Dolomite, Magnesite, and Calcite for Cleaning Hot Gas from a Fluidized Bed Biomass Gasifier with Steam: Life and Usefulness, Ind. Eng. Chem. Res., 1996, 3637-3643).

Diese Katalysatoren haben den Vorteil, dass sie in der Lage sind, neben Teer auch den im Produktgas enthaltenen Ammoniak zu zerstören. Allerdings ist die Lebensdauer dieser Katalysatoren, insbesondere in der Biomassevergasung, noch nicht ausreichend. Ferner sind sie schwefelempfindlich und neigen schnell zu Desaktivierung durch Verkokung, insbesondere wenn die zu reinigenden Gase hohe Teerkonzentrationen (> 2 g/m³_{N}) aufweisen.

Die WO 2007/116121 A1 beschreibt ein Verfahren zur Reformierung von Gas, welches teerartige Verunreinigungen enthält. Dem Gas wird zunächst Sauerstoff zugeführt. Diese Mischung wird anschließend mit einem Festkörperkatalysator kontaktiert, wobei die eigentliche Reformierung in einem zweistufigen Prozess stattfindet, bei dem die Gasmischung in einer ersten Stufe mit einem auf Zirkonium basierenden Katalysator und in einer zweiten Stufe mit einem Metallkatalysator, bestehend aus metallischem Nickel oder einem Edelmetall wie Pt, Pd, Rh oder Ru, kontaktiert wird.

Es ist wünschenswert, ein verbessertes Verfahren zur katalytischen Verringerung des Teergehalts in Gasen aus Vergasungsprozessen bereitzustellen.

Aufgabe der vorliegenden Erfindung ist die Bereitstellung eines Verfahrens zur katalytischen Verringerung des Teergehalts in Gasen aus Vergasungsprozessen.

Diese Aufgabe wird erfindungsgemäß durch ein Verfahren gelöst, umfassend das Kontaktieren mindestens eines Teils des aus einem Vergasungsprozess erhaltenen teerhaltigen Gases mit einem beispielsweise auf Schüttgut oder auf Monolithstruktur aufgebrachten edelmetallhaltigen Katalysator, wobei der edelmetallhaltige Katalysator wenigstens die beiden Edelmetalle Pt und Rh umfasst, sowie möglicherweise weitere Edelmetalle, ausgewählt aus der Gruppe bestehend aus Pd, Ir, Os, Ru und Re, umfasst. Die Edelmetalle werden im Folgenden auch als Aktivkomponenten bezeichnet.

Es wurde überraschend gefunden, dass bei Verwendung eines Katalysators, der mindestens zwei verschiedene Edelmetallkomponenten enthält, sehr gute Resultate im Hinblick auf die Verringerung des Teergehalts von Gasen aus Vergasungsprozessen erhalten werden. Ferner zeichnen sich die im erfindungsgemäßen Verfahren zu verwendenden Katalysatoren durch eine hohe Toleranz gegenüber Schwefelwasserstoff aus, welcher häufig als weitere Verunreinigung in den zu behandelnden Gasen vorliegt.

Der erfindungsgemäß verwendbare Katalysator umfasst die zwei Edelmetalle Pt und Rh, wobei auch Katalysatoren, die 3 oder 4 verschiedene Edelmetalle enthalten, im Rahmen der Erfindung eingesetzt werden können. Die zwei Edelmetalle Pt und Rh, die der Katalysator enthält, weisen vorzugsweise ein Gewichtsverhältnis von 1 : 10 bis 10 : 1, vorzugsweise 1 : 1 bis 10 : 1, auf. Besonders bevorzugt werden Katalysatoren verwendet, die Pt und Rh in einem Gewichtsverhältnis von 1 : 1 bis 6 : 1, vorzugsweise 2 : 1 bis 4 : 1, enthalten.

Ebenso als Aktivkomponente geeignet ist Ni, das mit mindestens den zwei Edelmetallen Platin und Rhodium, dotiert ist. Vorzugsweise wird ein Ni- zu Edelmetall-Gewichtsverhältnis von 5 : 1 zu 20 : 1 verwendet, besonders bevorzugt von 7 : 1 zu 13 : 1.

Der Katalysator kann weitere Bestandteile, wie Promotoren für die Aktivkomponenten wie z.B. Ceroxid, aufweisen.

Die Edelmetalle können direkt auf Schüttgut aufgebracht werden, z. B. auf einfache α-Al₂O₃-Träger oder andere hochtemperaturstabile Träger wie Calcium-Aluminat, Hexaaluminate, oder ähnliche keramische Trägersysteme, die beispielsweise vorher zu Kugeln, Tabletten, Extrudaten, Triholes oder anderen Formen geformt wurden. Dabei sind sowohl Al₂O₃ als auch andere Oxide wie Ce-Oxide, Zr-Oxide, Ti-Oxide, La-Oxide sowie Mischungen aus den Oxiden und gegebenenfalls zusätzlichen Promotoren denkbar. Über die Konzentration und Temperatur der Imprägnierlösung, die Porosität des Trägers und den Imprägnierprozess selbst können die Eindringtiefe und die Konzentration der katalytisch aktiven Edelmetalle auf dem Träger gesteuert werden.

Der erfindungsgemäße Katalysator kann durch Imprägnierung eines Trägers mit einer wässrigen Lösung von Salzen der Edelmetalle Pt und Rh hergestellt werden. Der imprägnierte Katalysator wird dann getrocknet und kalziniert, gegebenenfalls werden diese Schritte ein- oder mehrmals wiederholt.

Ausserdem können sogenannte Trägerkatalysatoren hergestellt werden, bei denen die katalytisch aktiven Komponenten in hochdisperser Form auf Trägermaterialien aufgebracht werden. Zu diesem Zweck werden Trägermaterialien verwendet, die eine große spezifische Oberfläche zur Aufnahme der katalytisch aktiven Komponenten besitzen. Es handelt sich um feinteilige, das heißt pulverförmige, temperaturstabile Metalloxide - im Folgenden bezeichnet als Washcoat. Typische Washcoat-Hauptbestandteile sind Aluminiumoxide, Ceroxide, Zirkonoxide und andere Metalloxide. Zusätzliche Promotoren zur Stabilisierung der hohen Oberflächen oder zur Unterdrückung bzw. Promotion von Nebenreaktionen können ebenfalls vorhanden sein. Typischerweise werden Aluminiumoxide mit BET-Oberflächen von etwa 50 bis etwa 250 m²/g verwendet.

Die Trägermaterialien werden in Form einer Beschichtung auf inerte Tragkörper - sogenannte Wabenkörper - aus Keramik (z. B. Cordierite) oder Metall aufgebracht. Zum Beschichten der Wabenkörper mit den Trägermaterialien werden die Trägermaterialien beispielsweise in Wasser dispergiert und beispielsweise durch einen Mahlvorgang homogenisiert. Die Wände der Wabenkörper werden dann durch ein- oder mehrmaliges Eintauchen in die Beschichtungsdispersion mit nachfolgendem Trocknen und Kalzinieren beschichtet. Bei dieser Vorgehensweise können die katalytisch aktiven Komponenten zu verschiedenen Zeitpunkten auf die spezifische Oberfläche der Trägermaterialien aufgebracht werden. Beispielsweise können die katalytisch aktiven Komponenten erst nach Beschichten der Wabenkörper mit der Dispersionsbeschichtung durch Eintauchen der beschichteten Wabenkörper in eine wässrige Lösung von löslichen Vorstufen der katalytisch aktiven Komponenten auf den Trägermaterialien abgeschieden werden. Alternativ können die katalytisch aktiven Komponenten in einem dem Anfertigen der Dispersionsbeschichtung vorgeschalteten Arbeitsschritt auf die pulverförmigen Trägermaterialien aufgebracht werden.

In einer bevorzugten Ausführungsform werden die Aktivkomponenten auf Trägermaterialien, umfassend ein Mischoxid, umfassend Ceroxid (CeOₓ), Lanthanoxid (La₂O₃), Aluminiumoxid (Al₂O₃), Yttriumoxid (Y₂O₃), Titanoxid (TiO₂), Zirkonoxid (ZrO₂), Siliciumoxid (SiO₂) oder Mischungen davon, aufgetragen. Das Trägermaterial-Mischoxid kann z. B. durch Imprägnierung von Aluminiumoxid mit den Nitratsalzen der jeweiligen anderen Metallen und anschließender Kalzinierung hergestellt werden.

Das Trägermaterial wird zuvor wie beschrieben z. B. auf monolithische Cordierit-Waben beschichtet, getrocknet und kalziniert; in einem oder mehreren weiteren Imprägnier-, Trocken- und Kalzinierschritten werden die Aktivkomponenten darauf abgeschieden. Die monolithischen Träger mit Wabenstruktur sind dem Fachmann bekannt und werden z. B. in der Automobilindustrie eingesetzt. Beispiele zu verschiedenen monolithischen Trägern sind in Handbook of Heterogeneous Catalysis 4 - Environmental Catalysis, Seiten 1575 - 1583 beschrieben. Andere geeignete Verfahren zum Aufbringen der Aktivkomponenten auf die Träger sind Imprägnieren, Sprühen, lonenaustausch, Eintauchen und alle anderen in der Literatur beschriebenen Techniken.

Die in Rahmen der Erfindung zu verwendenden Katalysatoren sind gegenüber Schwefelverbindungen, die meistens im zu reinigenden Gas enthalten sind, tolerant, d.h. die Aktivität des Katalysators ist im Vergleich zu einem Gasstrom ohne Schwefel zwar geringer, jedoch erfolgt keine vollständige Desaktivierung.

Das im Rahmen des erfindungsgemäßen Verfahrens zu behandelnde Gas umfasst üblicherweise als Hauptkomponenten Kohlenmonoxid, Kohlendioxid, Methan, Wasserstoff, Wasserdampf und Stickstoff. Es enthält ferner Teerverbindungen und typischerweise außerdem geringe Mengen an weiteren Verunreinigungen wie beispielsweise Ammoniak oder Schwefelwasserstoff. Als Vergasungsmedium im Vergasungsprozess können dabei Wasserdampf, Sauerstoff oder andere sauerstoffhaltige Gase wie z. B. Luft dienen. Je nach verwendetem Vergasungsverfahren können noch bestimmte Mengen des Vergasungsmediums im zu behandelnden Gas vorhanden sein.

Das erfindungsgemäße Verfahren wird zwischen der Prozessstufe der Brenngaserzeugung (thermochemische Vergasung) und der Brenngasnutzung (z. B. Gasmotor, Gasturbine, Brennstoffzelle, u.a.) in Form einer Verfahrensstufe, bei der die Teerverbindungen weitestgehend aus dem Gas entfernt werden, durchgeführt. Dabei können optional vor der katalytischen Teerentfernungsstufe staub- und/oder kohlenstoffhaltige Feststoffe aus dem Gas abgetrennt werden, beispielsweise durch physikalische Trennmethoden wie Zyklone, Filter, Wäscher, Umlenkungen oder ähnliches und/oder andere Verunreinigungen wie z. B. Schwefelverbindungen nach Abkühlen des Gases nach dem Katalysator beispielsweise durch adsorptive Abtrennung der Hauptschwefelkomponente H2S auf ZnO CuO/ZnO oder Aktivkohle abgetrennt werden. Ferner kann, bevor mindestens ein Teil des aus dem Vergasungsprozess erhaltenen Gases direkt mit dem vorstehend beschriebenen edelmetallhaltigen Katalysator, der mindestens zwei Edelmetalle enthält, in Kontakt gebracht wird, optional eine Sauerstoffanreicherung des Gases, wie in der WO 2007/116121 A1 beschrieben, vorgenommen werden. Falls vor der katalytischen Teerentfernungsstufe keine Staubentfernung vorgenommen wird, werden vorzugsweise relativ grobe Wabenkörper benutzt (mit z. B. 100 cpsi (cells per square inch) statt 400 cpsi), um Verbackungen des Wabeneintritts und der Wabenkanäle zu verhindern.

Nach dem erfindungsgemäßen Verfahren kann das Kontaktieren des zu behandelnden Gases mit dem edelmetallhaltigen Katalysator entweder direkt im Vergasungsreaktor oder in einem externen Reaktor vorgenommen werden. Im Rahmen der Erfindung wird mindestens ein Teil des aus einem Vergasungsprozess erhaltenen Gases mit dem edelmetallhaltigen Katalysator in Kontakt gebracht. Das Inkontaktbringen erfolgt insbesondere durch Leiten des Gasstromes durch oder über den Katalysator. Nach einer bevorzugten Ausführungsform wird das gesamte aus einem Vergasungsprozess erhaltene Gas nach dem erfindungsgemäßen Verfahren behandelt.

In Anwesenheit der katalytischen Oberflächen werden die Teerverbindungen durch chemische Reaktion mit anderen Gasbestandteilen in kleinere Moleküle gespalten. Die im Vergasungsreaktor gebildeten Teere werden dabei gemäß nachstehender Reaktionsgleichungen in die Nutzgase CO und H₂ chemisch umgewandelt, d.h. katalytisch reformiert (Gleichung 1 und 2). CₙHₘ steht dabei für teerartige Verbindungen. Ist im Gas noch Sauerstoff enthalten (z. B. aus dem Vergasungsmedium oder auch durch separate Zugabe), können auch Partial- (3) oder Totaloxidationreaktionen (4) auftreten:

CₙHₘ + n H₂O ↔ n CO + (n+m/2) H₂ (1)

CₙHₘ + n CO₂ ↔ 2n CO + (m/2) H₂ (2)

CₙHₘ + n/2 O₂ ↔ n CO + m/2 H₂ (3)

CₙHₘ + (n+m/4) O₂ ↔ n CO₂ + m/2 H₂O (4)

Das erfindungsgemäße Verfahren weist eine hohe Ausbeute, also eine hohe Teerreinigungsrate auf, vorzugsweise im Bereich von 60 - 100%, insbesondere 70 bis 90 %. Ferner sind die Katalysatoren hochtemperaturstabil (bis zu 1000°C); deshalb kann das Verfahren direkt nach der Vergasung ohne Abkühlung des Synthesegases eingesetzt werden. Aufgrund der hohen Aktivität der Katalysatoren kann das erfindungsgemäße Verfahren auch bei niedrigerem Temperaturniveau betrieben werden. Das Verfahren wird bevorzugt bei 500 - 1000°C, besonders bevorzugt bei 600°C - 800 °C und ganz besonders bevorzugt bei 650°C - 850°C durchgeführt. Beim erfindungsgemäßen Verfahren werden vorzugsweise Raumgeschwindigkeiten (totale (feuchte) RG) von 1000 bis 10000 Volumenstrom/Volumen Kat. angewendet, noch bevorzugter im Bereich von 3000 bis 6000 und besonders bevorzugt von 2000 bis 5000.

Teil der Erfindung ist ferner die Verwendung eines edelmetallhaltigen Katalysators, umfassend die Edelmetalle Pt und Rh, zur Verringerung des Teergehalts in Gasen aus Vergasungsprozessen von kohlenstoffhaltigen Ausgangsmaterialien. Bezüglich der vorteilhaften Ausgestaltungen der erfindungsgemäßen Verwendung wird auf die vorstehenden Ausführungen im Zusammenhang mit den erfindungsgemäßen Verfahren hingewiesen. Gegenstand der Erfindung ist des Weiteren ein Verfahren zur Herstellung von im Teergehalt verringerten Synthesegas unter Verwendung eines wie vorstehend beschriebenen edelmetallhaltigen Katalysators.

Die Erfindung wird durch die nachfolgenden Beispiele näher beschrieben, ohne dass sie durch diese begrenzt werden soll.

### Herstellungsbeispiel 1 (Trägermaterial):

Es wird ein Mischoxid-Pulver bestehend aus 3% La₂O₃, 17% CeO₂, und 80% Al₂O₃, bezogen auf Gew. %, in DEMI-H₂O suspendiert, anschließend 10min gerührt und auf einen pH-Wert von 4,5 mit 99 % Essigsäure eingestellt. Die Suspension wird auf einen Feststoffgehalt von ca. 40% eingestellt. Die Suspension wird gerührt und mehrfach in einer Dyna-Mill Kugelmühle gemahlen, bis eine Korngrössenzusammensetzung von d50 < 10 µm erreicht wird.

### Herstellungsbeispiel 2 (Katalysator):

Ein zylindrischer Wabenkörper aus Cordierite mit 400 cpsi (cells per square inch) Querschnittsfläche wird mehrfach in die Suspension aus Herstellungsbeispiel 1 eingetaucht, ausgeblasen bei 120°C getrocknet und anschließend 3 h bei 850°C an Luft kalciniert, bis der Wabenkörper eine Beladung von 100 g Mischoxid pro Liter Wabenvolumen aufweist. Der beschichtete Katalysatorträger wird anschließend in eine wässrige Lösung von Rh(NO₃)₃ eingetaucht. Der mit der Edelmetallsalzlösung getränkte Wabenkörper wird getrocknet und bei 550°C an Luft kalziniert. Der Tränkvorgang wird so vorgenommen, dass der Katalysatorträger je Liter Wabenvolumen 0,5 g Rhodium aufnimmt. Der beschichtete Katalysatorträger wird anschließend in eine wässrige Lösung von [Pt(NH₃)₄](OH)₂ eingetaucht. Der mit der Edelmetallsalzlösung getränkte Wabenkörper wird getrocknet und bei 550°C an Luft kalziniert. Der Tränkvorgang wird so vorgenommen und eventuell mehrfach wiederholt, dass der Katalysatorträger je Liter Wabenvolumen 1 g Platin aufnimmt. Die Endkonzentration an Edelmetallen beträgt 0,5 g/L Rh und 1 g/L Pt.

### Herstellungsbeispiel 3 (Katalysator):

Ein zylindrischer Wabenkörper aus Cordierite mit 400 cpsi (cells per square inch) Querschnittsfläche wird mehrfach in die Suspension aus Herstellungsbeispiel 1 eingetaucht, ausgeblasen bei 120°C getrocknet und anschließend 3 h bei 850°C an Luft kalciniert, bis der Wabenkörper eine Beladung von 100 g Mischoxid pro Liter Wabenvolumen aufweist. Der beschichtete Katalysatorträger wird anschließend in eine wässrige Lösung von Rh(NO₃)₃ eingetaucht. Der mit der Edelmetallsalzlösung getränkte Wabenkörper wird getrocknet und bei 550°C an Luft kalziniert. Der Tränkvorgang wird so vorgenommen, dass der Katalysatorträger je Liter Wabenvolumen 0,5 g Rhodium aufnimmt. Der beschichtete Katalysatorträger wird anschließend in eine wässrige Lösung von [Pt(NH₃)₄](OH)₂ eingetaucht. Der mit der Edelmetallsalzlösung getränkte Wabenkörper wird getrocknet und bei 550°C an Luft kalziniert. Der Tränkvorgang wird so vorgenommen und eventuell mehrfach wiederholt, dass der Katalysatorträger je Liter Wabenvolumen 2 g Platin aufnimmt. Die Endkonzentration an Edelmetallen beträgt 0,5 g/L Rh und 2 g/L Pt.

### Herstellungsbeispiel 4 (Katalysator):

Ein zylindrischer Wabenkörper aus Cordierite mit 400 cpsi (cells per square inch) Querschnittsfläche wird mehrfach in die Suspension aus Herstellungsbeispiel 1 eingetaucht, ausgeblasen bei 120°C getrocknet und anschließend 3 h bei 850°C an Luft kalciniert, bis der Wabenkörper eine Beladung von 100 g Mischoxid pro Liter Wabenvolumen aufweist. Der beschichtete Katalysatorträger wird anschließend in eine wässrige Lösung von Rh(NO₃)₃ eingetaucht. Der mit der Edelmetallsalzlösung getränkte Wabenkörper wird getrocknet und bei 550°C an Luft kalziniert. Der Tränkvorgang wird so vorgenommen, dass der Katalysatorträger je Liter Wabenvolumen 1 g Rhodium aufnimmt. Der beschichtete Katalysatorträger wird anschließend in eine wässrige Lösung von [Pt(NH₃)₄](OH)₂ eingetaucht. Der mit der Edelmetallsalzlösung getränkte Wabenkörper wird getrocknet und bei 550°C an Luft kalziniert. Der Tränkvorgang wird so vorgenommen und eventuell mehrfach wiederholt, dass der Katalysatorträger je Liter Wabenvolumen 4 g Platin aufnimmt. Die Endkonzentration an Edelmetallen beträgt 1 g/L Rh und 4 g/L Pt.

### Herstellungsbeispiel 5 (Katalysator, nicht gemäß der Erfindung):

Ein zylindrischer Wabenkörper aus Cordierite mit 400 cpsi (cells per square inch) Querschnittsfläche wird mehrfach in die Suspension aus Herstellungsbeispiel 1 eingetaucht, ausgeblasen bei 120°C getrocknet und anschließend 3 h bei 850°C an Luft kalciniert, bis der Wabenkörper eine Beladung von 100 g Mischoxid pro Liter Wabenvolumen aufweist. Der beschichtete Katalysatorträger wird anschließend in eine wässrige Lösung von Ni(NO₃)₂ eingetaucht. Der mit der Metallsalzlösung getränkte Wabenkörper wird getrocknet und bei 550°C an Luft kalziniert. Der Tränkvorgang wird so vorgenommen und eventuell mehrfach wiederholt, dass der Katalysatorträger je Liter Wabenvolumen 10 g Nickel aufnimmt.

### Herstellungsbeispiel 6 (Katalysator, nicht gemäß der Erfindung):

Ein zylindrischer Wabenkörper aus Cordierite mit 400 cpsi (cells per square inch) Querschnittsfläche wird mehrfach in die Suspension aus Herstellungsbeispiel 1 eingetaucht, ausgeblasen bei 120°C getrocknet und anschließend 3 h bei 850°C an Luft kalciniert, bis der Wabenkörper eine Beladung von 100 g Mischoxid pro Liter Wabenvolumen aufweist. Der beschichtete Katalysatorträger wird anschließend in eine wässrige Lösung von Ni(NO₃)₂ eingetaucht. Der mit der Metallsalzlösung getränkte Wabenkörper wird getrocknet und bei 550°C an Luft kalziniert. Der Tränkvorgang wird so vorgenommen und eventuell mehrfach wiederholt, dass der Katalysatorträger je Liter Wabenvolumen 10 g Nickel aufnimmt. Der beschichtete Katalysatorträger wird anschließend in eine wässrige Lösung von Rh(NO₃)₃ eingetaucht. Der mit der Edelmetallsalzlösung getränkte Wabenkörper wird getrocknet und bei 550°C an Luft kalziniert. Der Tränkvorgang wird so vorgenommen, dass der Katalysatorträger je Liter Wabenvolumen 0,1 g Rhodium aufnimmt.

## Patentansprüche

1. Verfahren zur Verringerung des Teergehalts in Gasen aus einem Vergasungsprozess aus kohlenstoffhaltigen Ausgangsmaterialien, umfassend das Kontaktieren mindestens eines Teils des aus einem Vergasungsprozess erhaltenen teerhaltigen Gases mit einem edelmetallhaltigen Katalysator, wobei der edelmetallhaltige Katalysator die Edelmetalle Pt und Rh umfasst.

2. Verfahren nach Anspruch 1, **dadurch gekennzeichnet, dass** der edelmetallhaltige Katalysator auf einem Träger aufgebracht ist oder als Schüttgutkatalysator vorliegt.

3. Verfahren nach Anspruch 2, **dadurch gekennzeichnet, dass** der Träger in Form einer Wabe vorliegt.

4. Verfahren nach einem der Ansprüche 2 oder 3, **dadurch gekennzeichnet, dass** der Träger Ceroxid (CeOₓ), Lanthanoxid (La₂O₃), Aluminiumoxid (Al₂O₃), Yttriumoxid (Y₂O₃), Titanoxid (TiO₂), Zirkonoxid (ZrO₂), Siliciumoxid (SiO₂) oder Mischungen davon umfasst.

5. Verfahren nach einem der vorangehenden Ansprüche, **dadurch gekennzeichnet, dass** das Kontaktieren mit dem edelmetallhaltigen Katalysator direkt im Vergasungsreaktor oder in einem externen Reaktor stattfindet.

6. Verfahren nach einem der vorangehenden Ansprüche, **dadurch gekennzeichnet, dass** der Teer Mischungen zyklischer und polyzyklischer Aromaten umfasst, bevorzugt mit einem Molekulargewicht von mehr als etwa 78 g/mol.

7. Verfahren nach einem der vorangehenden Ansprüche, **dadurch gekennzeichnet, dass** der Vergasungsprozess ein Biomasse-Vergasungsprozess ist.

8. Verwendung eines edelmetallhaltigen Katalysators, umfassend mindestens die zwei Edelmetalle Pt und Rh zur Verringerung des Teergehalts in teerhaltigen Gasen aus Vergasungsprozessen von kohlenstoffhaltigen Ausgangsmaterialien.

9. Verwendung nach Anspruch 8, **dadurch gekennzeichnet, dass** der edelmetallhaltige Katalysator wie in einem der Ansprüche 2 bis 4 definiert ist.

10. Verwendung nach einem der Ansprüche 8 oder 9, **dadurch gekennzeichnet, dass** das Kontaktieren mit dem edelmetallhaltigen Katalysator direkt im Vergasungsreaktor oder in einem externen Reaktor stattfindet.

11. Verwendung nach einem der Ansprüche 8 bis 10, **dadurch gekennzeichnet, dass** der Teer Mischungen zyklischer und polyzyklischer Aromaten umfasst, bevorzugt mit einem Molekulargewicht von mehr als etwa 78 g/mol.

12. Verwendung nach einem der Ansprüche 8 bis 11, **dadurch gekennzeichnet, dass** der Vergasungsprozess ein Biomasse-Vergasungsprozess ist.

## Claims

1. Method of reducing the tar content in gases from a gasification process using carbon-containing starting materials, comprising contacting at least part of the tar-containing gas obtained from a gasification process with a noble metal-containing catalyst, the noble metal-containing catalyst comprising the noble metals Pt and Rh.

2. Method according to Claim 1, **characterized in that** the noble metal-containing catalyst has been applied to a support or is present as particulate catalyst.

3. Method according to Claim 2, **characterized in that** the support is present in the form of a honeycomb.

4. Method according to either of Claims 2 and 3, **characterized in that** the support comprises cerium oxide (CeOₓ), lanthanum oxide (La₂O₃), aluminium oxide (Al₂O₃), yttrium oxide (Y₂O₃), titanium oxide (TiO₂), zirconium oxide (ZrO₂), silicon oxide (SiO₂) or mixtures thereof.

5. Method according to any of the preceding claims, **characterized in that** the contacting with the noble metal-containing catalyst takes place directly in the gasification reactor or in an external reactor.

6. Method according to any of the preceding claims, **characterized in that** the tar comprises mixtures of cyclic and polycyclic aromatics, preferably having a molecular weight of more than about 78 g/mol.

7. Method according to any of the preceding claims, **characterized in that** the gasification process is a biomass gasification process.

8. Use of a noble metal-containing catalyst comprising at least the two noble metals Pt and Rh for reducing the tar content in tar-containing gases from gasification processes using carbon-containing starting materials.

9. Use according to Claim 8, **characterized in that** the noble metal-containing catalyst is as defined in any of Claims 2 to 4.

10. Use according to either of Claims 8 and 9, **characterized in that** the contacting with the noble metal-containing catalyst takes place directly in the gasification reactor or in an external reactor.

11. Use according to any of Claims 8 to 10, **characterized in that** the tar comprises mixtures of cyclic and polycyclic aromatics, preferably having a molecular weight of more than about 78 g/mol.

12. Use according to any of Claims 8 to 11, **characterized in that** the gasification process is a biomass gasification process.

## Revendications

1. Procédé de réduction de la teneur en goudron de gaz issus d'un procédé de gazéification de matériaux de départ contenant du carbone, comprenant la mise en contact d'au moins une partie du gaz contenant du goudron obtenu à partir d'un procédé de gazéification avec un catalyseur contenant des métaux nobles, le catalyseur contenant des métaux nobles comprenant les métaux nobles Pt et Rh.

2. Procédé selon la revendication 1, **caractérisé en ce que** le catalyseur contenant des métaux nobles est appliqué sur un support ou se présente sous la forme d'un catalyseur en vrac.

3. Procédé selon la revendication 2, **caractérisé en ce que** le support se présente sous la forme d'un nid d'abeilles.

4. Procédé selon l'une quelconque des revendications 2 ou 3, **caractérisé en ce que** le support comprend de l'oxyde de cérium (CeOₓ), de l'oxyde de lanthane (La₂O₃), de l'oxyde d'aluminium (Al₂O₃), de l'oxyde d'yttrium (Y₂O₃), de l'oxyde de titane (TiO₂), de l'oxyde de zirconium (ZrO₂), de l'oxyde de silicium (SiO₂) ou des mélanges de ceux-ci.

5. Procédé selon l'une quelconque des revendications précédentes, **caractérisé en ce que** la mise en contact avec le catalyseur contenant des métaux nobles a lieu directement dans le réacteur de gazéification ou dans un réacteur externe.

6. Procédé selon l'une quelconque des revendications précédentes, **caractérisé en ce que** le goudron comprend des mélanges de composés aromatiques cycliques et polycycliques, de préférence ayant un poids moléculaire supérieur à environ 78 g/mol.

7. Procédé selon l'une quelconque des revendications précédentes, **caractérisé en ce que** le procédé de gazéification est un procédé de gazéification d'une biomasse.

8. Utilisation d'un catalyseur contenant des métaux nobles, comprenant au moins les deux métaux nobles Pt et Rh, pour la réduction de la teneur en goudron de gaz contenant du goudron issus de procédés de gazéification de matériaux de départ contenant du carbone.

9. Utilisation selon la revendication 8, **caractérisée en ce que** le catalyseur contenant des métaux nobles est tel que défini dans l'une quelconque des revendications 2 à 4.

10. Utilisation selon l'une quelconque des revendications 8 ou 9, **caractérisée en ce que** la mise en contact avec le catalyseur contenant des métaux nobles a lieu directement dans le réacteur de gazéification ou dans un réacteur externe.

11. Utilisation selon l'une quelconque des revendications 8 à 10, **caractérisée en ce que** le goudron comprend des mélanges de composés aromatiques cycliques et polycycliques, de préférence ayant un poids moléculaire supérieur à environ 78 g/mol.

12. Utilisation selon l'une quelconque des revendications 8 à 11, **caractérisée en ce que** le procédé de gazéification est un procédé de gazéification d'une biomasse.
